# EUROPEAN PATENT APPLICATION

(11) **EP 1 760 608 A2**
(43) Date of publication of application: **07.03.2007**
(21) Application number: 05745036.3
(22) Date of filing: 30.05.2005
(51) Int. Cl.: G06F 17/27, G06F 13/00

(54) **LANGUAGE IDENTIFICATION EQUIPMENT, TRANSLATION EQUIPMENT, TRANSLATION SERVER, LANGUAGE IDENTIFICATION METHOD, AND TRANSLATION PROCESSING METHOD**

(30) Priority: 31.05.2004 JP 2004161801
(71) Applicant: Impulse Japan Inc., Tokyo 136-0071 (JP)
(72) Inventor: SUZUKI, Takamasa, IMPULSE JAPAN INC., Tokyo 136-0071 (JP)
(74) Representative: Viering, Hans-Martin
(86) International application number: PCT/JP2005/009890
(87) International publication number: WO 2005/116865

(57) **Abstract**

In some preferred embodiments, a language identification apparatus, comprises a storing means 32 configured to store undefined character code lists of a plurality of languages to which no character is allotted in a character code table of each language, a collating means 34 configured to collate a character code of each character contained in a character string of a language identification target with the undefined character code list of each language stored in the storing means, and an identification means 34 configured to identify a language in which a character corresponding to the undefined character code is not contained in the character string as a language of the character string among the plurality of languages as a result of collation by the collating means.

## Description

### Technical Field

The present invention relates to a language identification apparatus, a translation apparatus, a translation server, a language identification method, and a translation processing method used for automatically identifying the language of a WEB (World Wide Web) page accessed by a user on the Internet and translating it into a user's language.

### Background Art

In recent years, the Internet is widely recognized and has become popular as one of information gathering techniques.

However, in cases where the WEB page accessed by the user on the Internet is displayed in a language different from the language used by the user, the user cannot understand the contents.

Therefore, the WEB page displayed in a language different from the language used by the user is translated by a translation engine, and the WEB page reflecting the translated results is displayed on a user's terminal device.

In this case, it has been performed to automatically identify the language used in the WEB page (see, e.g., Japanese Unexamined Laid-open Patent Publication No. 2000-330992).

Such automatic language identification was performed by referring to the encoding of the character written in the homepage (WEB page).

In Europe, however, since the same encoding is used in English and other languages, the language identification cannot be performed in certain areas. Furthermore, the character encoding tends to be standardized. As a result, language identification performed by referring to the character encoding has a limitation, and therefore a method capable of assuredly performing language identification has been desired.

The present invention was made to solve the aforementioned problems, and aims to provide a language identification apparatus and a language identification method capable of performing language identification automatically and assuredly, and also aims to provide a translation apparatus, a translation server, and a translation processing method using the aforementioned language identification apparatus/method.

### Disclosure of Invention

The present invention provides the following means to solve the aforementioned objects.

[1] A language identification apparatus, comprising:
   a storing means configured to store undefined character code lists of a plurality of languages to which no character is allotted in a character code table of each language;
   a collating means configured to collate a character code of each character contained in a character string of a language identification target with the undefined character code list of each language stored in the storing means; and
   an identification means configured to identify a language in which a character corresponding to the undefined character code is not contained in the character string as a language of the character string among the plurality of languages as a result of collation by the collating means.

According to this invention, the character code of each character contained in the character string of the language identification target is collated with the undefined character code list of each language stored in the storing means, and the language in which the character corresponding to the undefined character code is not contained in the character string is identified as the language of the character strain among the plurality of language as a result of collating. That is, the language identification is performed by utilizing the undefined character code peculiar to each language. Therefore, there is no possibility that the language identification becomes difficult due to the standardized encoding like in the case of referring to the encoding of the character written in the homepage (WEB page), the language identification can be performed assuredly and automatically.

[2] The language identification apparatus as recited in the aforementioned Item 1, wherein the collating means is configured to collate a character code of each character contained in the character string with the undefined character code list of each language every each character contained in the character string.

According to this invention, since the collating means collates the character code of each character contained in the character string with the undefined character code list of each language, the collation processing and the language narrowing can be performed promptly and assuredly.

[3] A translation apparatus, comprising:
a storing means configured to store undefined character code lists of a plurality of languages to which no character is allotted in a character code table of each language;
a collating means configured to collate a character code of each character contained in a character string of a language identification target with the undefined character code list of each language stored in the storing means;
an identification means configured to identify a language in which a character corresponding to the undefined character code is not contained in the character string as a language of the character string among the plurality of languages as a result of collation by the collating means; and
a translation means configured to translate the character string whose language was identified by the identification means into another language.

According to this invention, since the language identified character string is translated into another language after the language identification, a translation into a proper language can be performed by the assured language identification.

[4] The translation apparatus as recited in the aforementioned Item 3, wherein the collating means collates a character code of each character contained in the character string with the undefined character code list of each language every each character contained in the character string.

According to this invention, since the collating means collates the character code of each character contained in the character string with the undefined character code list of each language, the collation processing and the language narrowing can be performed promptly and assuredly, which in turn can enable appropriate and prompt translation.

[5] A translation server, comprising:
a storing means configured to store undefined character code lists of a plurality of languages to which no character is allotted in a character code table of each language;
a collating means configured to collate a character code of each character contained in a character string displayed on a WEB page accessed by a user via a terminal device with the undefined character code list of each language stored in the storing means;
an identification means configured to identify a language in which a character corresponding to the undefined character code is not contained in the character string as a language of the character string among the plurality of languages as a result of collation by the collating means;
a translation means configured to translate the character string of the WEB page whose language was identified by the identification means into another language; and
a display control means configured to display the WEB page reflecting translation results on the user terminal.

According to this invention, since the language of the WEB page accessed by the user is automatically identified and the WEB page reflecting the translation results is displayed on the user terminal, the user can enjoy continuous netsurfing without regard to the difference of the display languages of WEB pages.

[6] The translation apparatus as recited in the aforementioned Item 5, wherein the collating means collates a character code of each character contained in the character string with the undefined character code list of each language every each character contained in the character string.

According to this invention, since the collation processing a language narrowing can be performed promptly and assuredly and therefore appropriate translation can be performed promptly, the WEB page reflecting translation results can be displayed promptly.

[7] A language identification method, comprising:
a step of collating a character code of each character contained in a character string of a language identification target with undefined character code lists of a plurality of languages to which no character is allotted in a character code table of each language; and
a step of identifying a language in which a character corresponding to the undefined character code is not contained in the character string as a language of the character string among the plurality of languages as a result of collation.

According to this invention, since the language identification is performed by utilizing the undefined character code peculiar to each language, there is no possibility that the language identification becomes difficult due to the standardized encoding like in the case of referring to the encoding of the character written in the homepage (WEB page), the language identification can be performed assuredly and automatically.

[8] A translation processing method, comprising:
a step of collating a character code of each character contained in a character string of a language identification target with undefined character code lists of a plurality of languages to which no character is allotted in a character code list of each language;
a step of identifying a language in which a character corresponding to the undefined character code is not contained in the character string as a language of the character string among the plurality of languages as a result of collation; and
a step of translating the character string whose language was identified into another language.

According to this invention, since the language identified character string is translated into another language after the language identification, a translation into a proper language can be performed by the assured language identification.

[9] A translation processing method, comprising:
a step of a collating a character code of each character contained in a character string displayed on a WEB page accessed by a user via a terminal device with undefined character code lists of a plurality of languages to which no character is allotted in a character code list of each language;
a step of identifying a language in which a character corresponding to the undefined character code is not contained in the character string as a language of the character string among the plurality of languages as a result of collation;
a step of translating the character string of the WEB page whose language was identified into another language; and
a step of displaying the WEB page reflecting translation results on the user terminal.

According to this invention, since the language of the WEB page accessed by the user is automatically identified and the WEB page reflecting the translation results is displayed on the user terminal, the user can enjoy continuous netsurfing without regard to the difference of the display languages of WEB pages.

### Brief Description of Drawings

Fig. 1 is a block diagram showing a schematic configuration of a WEB page translation system according to an embodiment of this invention.
Fig. 2 is a flow chart showing an operation of a translation server used in the WEB page translation system shown in Fig. 1.
Fig. 3 is a flow chart showing contents of language identification processing at S4 in Fig. 2.
Figs. 4(a) and 4(b) show examples of character code tables for use in explaining a basic concept.

### Best Mode for Carrying Out the Invention

Hereinafter, an embodiment of the present invention will be explained.

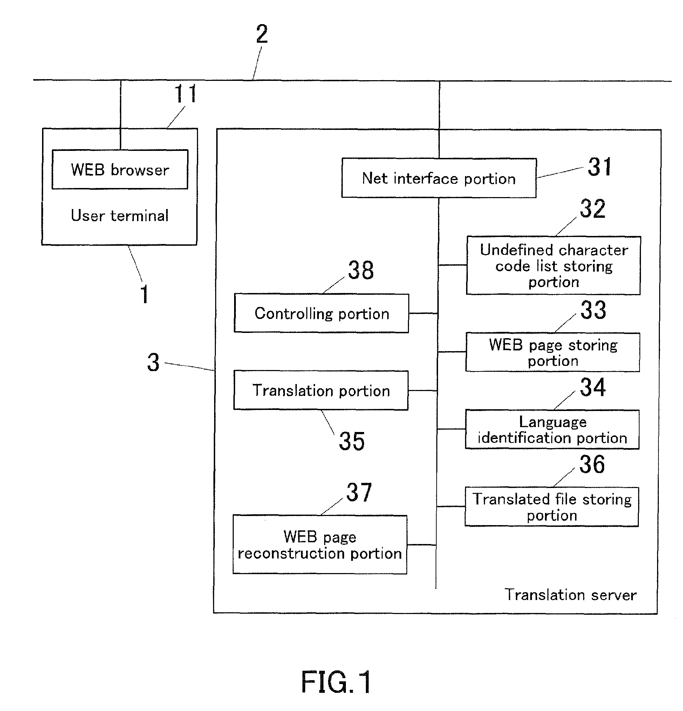

Fig. 1 is a block diagram showing a schematic structure of a WEB page translation system according to an embodiment of the present invention.

In Fig. 1, the reference numeral "1" denotes a user terminal such as, e.g., a personal computer. This user terminal 1 is configured to be connected by the WEB browser 11 to a translation server 3 via the Internet 2.

The translation server 3 is provided with a net interface portion 31, an undefined character code list storing portion 32, a WEB page storing portion 33, a language identification portion 34, a translation portion 35, a translated file storing portion 36, a WEB page reconstruction portion 37, and a controlling portion 38.

The net interface portion 31 functions as an input/output portion which connects the Internet 2 to the translation server 3.

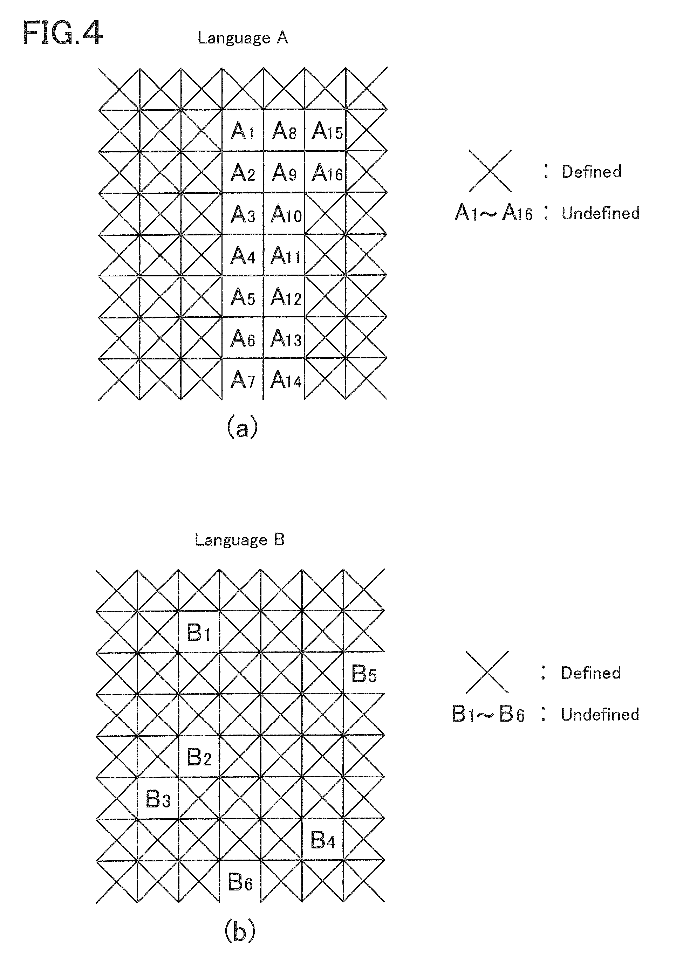

In the undefined character code list storing portion 32, lists of undefined character codes to which no character is allotted in a character code table are previously stored each of a plurality of languages. For example, as to the language A shown in Fig. 4(a), undefined character codes A1-A16 in the character code table are previously stored as an undefined character code list. Furthermore, as to the language B shown in Fig. 4(b), undefined character codes B1-B6 are stored as an undefined character code list. As to other languages, in the same manner as mentioned above, an undefined character code list is previously stored. Although it is ideal that undefined character code lists about all of the languages used on the Internet are stored, it is acceptable that at least major languages are stored. The present invention, however, is not limited to the above, and covers the case in which undefined character code lists of a plurality of languages are stored.

The WEB page storing portion 33 stores contents of a WEB page having an address specified by the user with an URL (Uniform Resource Locator) at the user terminal 1.

The language identification portion 34 automatically identifies the language of the character string displayed on the WEB page stored in the WEB page storing portion 33. The concrete identification processing will be explained later.

The translation portion 35 is provided with a plurality of translation engines corresponding to each language, and translates the character string of the WEB page whose language was identified by the language identification portion 34 into a language used by the user. For example, in cases where it is discriminated that the WEB page accessed by a Japanese user is an English page, the contents of the WEB page will be translated into Japanese. In the case of a Chinese WEB page, the Chinese WEB page will be translated into Japanese.

The translated file storing portion 36 stores the translation results translated by the translation portion 35, and the WEB page reconstruction portion 37 reconstructs the WEB page reflecting the translation results.

The controlling portion 38 integrally controls the entire translation server 3. For example, the controlling portion 38 makes the WEB page storing portion 33 take in the WEB page having the URL specified by the user and store it, makes the language identification portion 34 identity the language, makes the translation portion 35 translate the language, makes the translated file storing portion 36 store the translated file, makes the WEB page reconstruction portion 37 reconstruct the WEB page reflecting the translation results, and transmits the reconstructed WEB page to the user terminal 1 to display it.

Next, the operation of the translation server 3 in the WEB page translation system shown in Fig. 1 will be explained.

After accessing the translation server A from the user terminal 1, the user specifies a URL. The controlling portion 38 of the translation server 3 discriminates whether a URL is specified. If not specified (NO at S1), the processing terminates. If a URL is specified (YES at S1), after acquiring the contents of the WEB page specified by the URL through the Internet and the net interface portion 31 at S2, the controlling portion 38 stores the contents of the acquired WEB page in the WEB page storing portion 33 at S3.

Next, at S4, the language identification portion 34 identifies the language of the character string currently displayed on the WEB page stored in the WEB page storing portion 33. This language distinction processing will be explained later.

Upon completion of the language identification, after translating the character string of the WEB page into a user's language (for example, Japanese) using a translation engine of the identified language at S5, the translation portion 35 stores the translated file in the translated file storing portion 36 at S6.

Subsequently, the WEB page reconstruction portion 37 reconstructs the contents of the WEB page into the translated contents based on the contents of the WEB page stored in the WEB page storing portion 33 and the translated file stored in the translated file storing portion 36 at S7. Then, at S8, the controlling portion 38 transmits the contents of the reconstructed WEB page to the user terminal 1 via the net interface portion 31, and terminates the processing at the translation server 3.

The translated WEB page transmitted to the user terminal 1 is displayed on a display device (not illustrated) of the user terminal 1. Thus, the WEB page accessed by the user can be seen in the user's language.

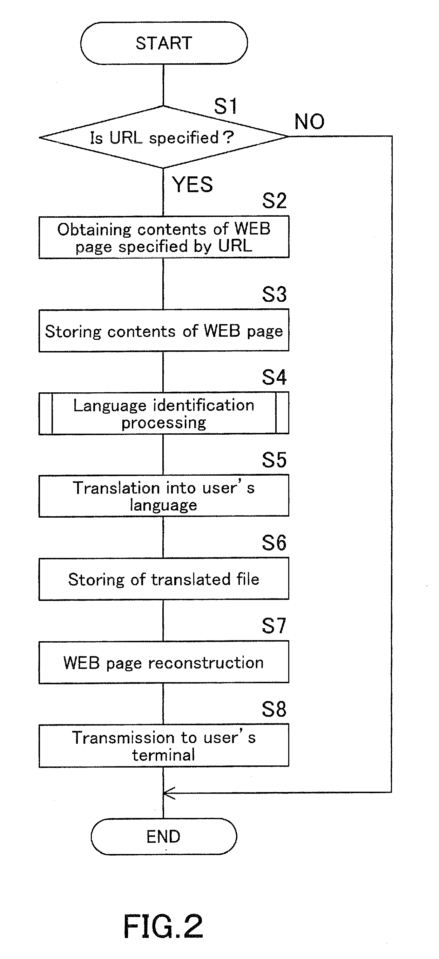

When the user specifies a link on the displayed WEB page, the linked WEB page will be processed in the same manner as shown in Fig. 2, and therefore the user can see the linked WEB site which is automatically translated into the user's language.

Through the aforementioned processing, a user can continuously enjoy netsurfing without recognizing the difference of the displayed language of a WEB page.

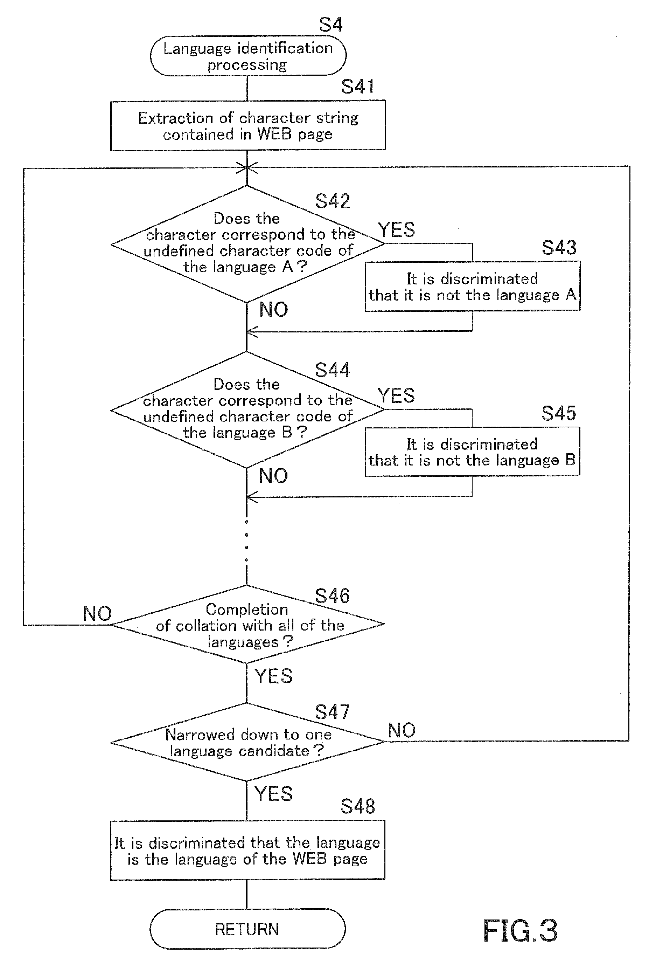

Fig. 3 is a flow chart showing the contents of the language identification processing of S4 in the in the flow chart of Fig. 2.

After extracting the character string currently used on the WEB page as a translation target at S41, the language identification portion 34 discriminates whether the character code of the first character of the character string corresponds to one of the languages stored in the undefined character code list storing portion 32, for example, one of the undefined character codes (A1 to A16 in Fig. 4(a)) of the language A shown in Fig. 4(a).

If it does not correspond (No at S42), the routine proceeds to S44. If it corresponds (YES at S42), it means that the undefined character code of the language A defines a character. Accordingly, this in turn means the language of the character is not the language A. For this reason, after discriminating that the language is not the language A at S43, the routine proceeds to S44.

At S44, it is discriminated whether the first character of the character string corresponds to another language, for example, an undefined character code of the language B shown in Fig. 4(b) (B1 to B6 in Fig. 4(b)).

If it does not correspond (NO at S44), collation of the next language will be performed. If it corresponds (YES at S44), it means that the undefined character code of the language B defines a character. Accordingly, this in turn means the language of the character is not the language B. For this reason, it is discriminated that the language is not the language B at S45.

As mentioned above, as to the first character of the character string, collation with the undefined character code list is performed to all of the languages stored in the undefined character code list storing portion 32.

At S46, it is discriminated whether collation of the first character with all of the languages has been completed. If not completed (NO at S46), the routine returns to S42 to continue the collation until collation with all of the languages is completed. If collation with all of the languages has been completed about the first character (YES at S46), at S47, it is discriminated whether the candidate of language was narrowed into one.

If not narrowed into one candidate (NO at S47), the routine returns to S42 to execute the narrowing down of the language candidate by the collation processing at S42 to S46 about the second character of the character string. Collation processing will be performed about the third character, the fourth character ..... of the character string until the language candidate is narrowed down into one.

As mentioned above, since collation with the undefined character code of each language is performed every character of the character string, collation processing and language narrowing processing can be performed promptly and assuredly.

When the language candidate is narrowed down into one (YES at S47), it is discriminated that the language is identified as the language of the character string as S48.

In the identification processing shown in Fig. 3, when the language candidate is narrowed down to one, it is discriminated that the language candidate is identified as the language used in the WEB page. However, the language identification can be performed after completion of collating all of the characters of the character string with the undefined character code lists of all of the languages.

Although one embodiment of the present invention was explained above, the present invention is not limited to the embodiment. For example, in the WEB page translation system, although the explanation is directed to the case in which the language of the WEB page is identified. However, the language identification apparatus and the language identification method according to the present invention are not limited to language identification of a WEB page, but can be applied to all of the cases in which language identification is performed automatically.

This application claims priority to Japanese Patent Application No. 2004-161801 filed on May 31, 2004, the disclosure of which is incorporated by reference in its entirety.

The terms and expressions which have been employed herein are used as terms of description and not of limitation, and there is no intent, in the use of such terms and expressions, of excluding any of the equivalents of the features shown and described or portions thereof , but it is recognized that various modifications are possible within the scope of the invention claimed.

## Claims

1. A language identification apparatus, comprising:
a storing means configured to store undefined character code lists of a plurality of languages to which no character is allotted in a character code table of each language;
a collating means configured to collate a character code of each character contained in a character string of a language identification target with the undefined character code list of each language stored in the storing means; and
an identification means configured to identify a language in which a character corresponding to the undefined character code is not contained in the character string as a language of the character string among the plurality of languages as a result of collation by the collating means.

2. The language identification apparatus as recited in claim 1, wherein the collating means is configured to collate a character code of each character contained in the character string with the undefined character code list of each language every each character contained in the character string.

3. A translation apparatus, comprising:
a storing means configured to store undefined character code lists of a plurality of languages to which no character is allotted in a character code table of each language;
a collating means configured to collate a character code of each character contained in a character string of a language identification target with the undefined character code list of each language stored in the storing means;
an identification means configured to identify a language in which a character corresponding to the undefined character code is not contained in the character string as a language of the character string among the plurality of languages as a result of collation by the collating means; and
a translation means configured to translate the character string whose language was identified by the identification means into another language.

4. The translation apparatus as recited in claim 3, wherein the collating means collates a character code of each character contained in the character string with the undefined character code list of each language every each character contained in the character string.

5. A translation server, comprising:
a storing means configured to store undefined character code lists of a plurality of languages to which no character is allotted in a character code table of each language;
a collating means configured to collate a character code of each character contained in a character string displayed on a WEB page accessed by a user via a terminal device with the undefined character code list of each language stored in the storing means;
an identification means configured to identify a language in which a character corresponding to the undefined character code is not contained in the character string as a language of the character string among the plurality of languages as a result of collation by the collating means;
a translation means configured to translate the character string of the WEB page whose language was identified by the identification means into another language; and
a display control means configured to display the WEB page reflecting translation results on the user terminal.

6. The translation apparatus as recited in claim 5, wherein the collating means collates a character code of each character contained in the character string with the undefined character code list of each language every each character contained in the character string.

7. A language identification method, comprising:
a step of collating a character code of each character contained in a character string of a language identification target with undefined character code lists of a plurality of languages to which no character is allotted in a character code table of each language; and
a step of identifying a language in which a character corresponding to the undefined character code is not contained in the character string as a language of the character string among the plurality of languages as a result of collation.

8. A translation processing method, comprising:
a step of collating a character code of each character contained in a character string of a language identification target with undefined character code lists of a plurality of languages to which no character is allotted in a character code list of each language;
a step of identifying a language in which a character corresponding to the undefined character code is not contained in the character string as a language of the character string among the plurality of languages as a result of collation; and
a step of translating the character string whose language was identified into another language.

9. A translation processing method, comprising:
a step of a collating a character code of each character contained in a character string displayed on a WEB page accessed by a user via a terminal device with undefined character code lists of a plurality of languages to which no character is allotted in a character code list of each language;
a step of identifying a language in which a character corresponding to the undefined character code is not contained in the character string as a language of the character string among the plurality of languages as a result of collation;
a step of translating the character string of the WEB page whose language was identified into another language; and
a step of displaying the WEB page reflecting translation results on the user terminal.
